# EUROPEAN PATENT SPECIFICATION

(11) **EP 2 565 887 B1**
(45) Date of publication and mention of the grant of the patent: **10.10.2018**
(21) Application number: 11775167.7
(22) Date of filing: 28.04.2011
(51) Int. Cl.: H01G 11/38, H01G 11/42

(54) **POLARIZABLE ELECTRODE MATERIAL FOR ELECTRIC DOUBLE LAYER CAPACITOR HAVING IMPROVED WITHSTAND VOLTAGE, AND ELECTRIC DOUBLE LAYER CAPACITOR USING SAME**
POLARISIERBARES ELEKTRODENMATERIAL FÜR EINEN ELEKTRISCHEN DOPPELSCHICHTKONDENSATOR MIT ERHÖHTER STOSSSPANNUNG UND ELEKTRISCHER DOPPELSCHICHTKONDENSATOR DAMIT
MATÉRIAU D'ÉLECTRODE POLARISABLE POUR CONDENSATEUR À COUCHE DOUBLE ÉLECTRIQUE À TENSION DE TENUE ÉLEVÉE, ET CONDENSATEUR À COUCHE DOUBLE ÉLECTRIQUE UTILISANT LEDIT MATÉRIAU

(30) Priority: 30.04.2010 JP 2010105703
(43) Date of publication of application: 06.03.2013
(73) Proprietor: W.L. Gore & Associates, Co., Ltd., Tokyo 108-0075 (JP)
(72) Inventor: ITO, Eiki, Tokyo 108-0075 (JP); NORIEDA, Hiroyuki, Tokyo 108-0075 (JP); KOBAYASHI, Kotaro, Tokyo 108-0075 (JP)
(74) Representative: Schmitt-Nilson Schraud Waibel Wohlfrom Patentanwälte Partnerschaft mbB
(86) International application number: PCT/JP2011/060796
(87) International publication number: WO 2011/136390

(56) References cited:
- JP-A- 2007 280 747
- JP-A- 2008 252 062
- US-A- 5 079 674
- US-A1- 2006 127 773
- US-A1- 2009 325 039

## Description

### Technical Field

The present invention relates to a polarizing electrode material for an electric double layer capacitor, in which voltage endurance is improved with an object of improving energy density and long-term reliability, as well as an electric double layer capacitor using the same. More specifically, it relates to a polarizing electrode material for a high withstand voltage-type electric double layer capacitor having high energy density and also with little time-dependent deterioration, such as time-dependent decrease in capacitance, or time-dependent increase in resistance, namely with excellent long-term reliability, as well as an electric double layer capacitor using the same.

### Background Art

An electric double layer capacitor is an accumulator element utilizing the capacitance of an electric double layer to be formed by adsorption/desorption of an electrolyte ion at interfaces between a pair of positive and negative polarizing electrodes and an electrolyte.

Broad applications of an electric double layer capacitor have been studied for a small-capacity memory backup, etc., medium-capacity auxiliary power for an electric vehicle, auxiliary power for a solar cell, auxiliary power for wind power generation, a momentary power interruption compensator, etc., and a large-capacity capacitor.

Such properties as capacitance (C), service voltage (V), energy density (E), internal resistance, and service life are known for an electric double layer capacitor. Although improvement of any property is important, especially improvement of the energy density, which is a weak point of an electric double layer capacitor, and further prolongation of the service life (improvement of the long-term reliability), which is a strong point, have been recently sought with respect to applications from the small-capacity type to a large-capacity type capacitor.

Since the energy density (E) of an electric double layer capacitor is proportional to the square of the service voltage (energy density E=0.5 x C x V x V (where, C: capacitance, and V: service voltage)), it is effective to enhance the service voltage (withstand voltage) in order to improve the energy density.

There are two types of electric double layer capacitors, an aqueous electrolyte, and a nonaqueous electrolyte. With an aqueous electrolyte, although there is an advantage that a low resistance type electric double layer capacitor can be obtained, the service voltage must be suppressed below a voltage at which electrolysis of water takes place, and is in practice around 0.8 V. On the other hand, with a nonaqueous electrolyte, the use at a higher voltage is possible and the service voltage is usually about 2.5 V, and a voltage as high as about 2.7 V is also applied. A higher energy density has been demanded recently. For example, a capacitor enabling service voltage of 3.0 V has been strongly sought for, so as to meet an electric double layer capacitor of 5.5 V (to be attained by connecting 2 electric double layer capacitors in series). However, there have been concerns that the increase in the service voltage may accelerate the time-dependent deterioration of an electric double layer capacitor (the time-dependent decrease in the capacitance, the time-dependent increase in the resistance) so as to deteriorate the long-term reliability, which has been an advantage of an electric double layer capacitor.

Causes of the time-dependent deterioration of an electric double layer capacitor are not clear, but the following mechanism is conceivable. In an electric double layer capacitor, there exists residual moisture in an electrolyte and moisture having entered during assembling; there exists further physically adsorbed water or chemically-bound adsorbed water on surfaces of and inside an active carbon, an electroconductive aid, a binder, a separator, *etc.* to be used for an electrode layer; the moisture is isolated as water during repeated charges and discharges; the water is electrolyzed by voltage application to generate a gas, and causes degradation of an electrolyte (solution) to form degradation products; the degradation products coat surfaces of an active carbon or clog pores of an active carbon, to decrease the surface area of an active carbon causing decrease in the capacitance, and further the degradation products clog openings of the separator to increase also the resistance.

It is difficult to avoid degradation of the electrolyte, because active carbon used in an electric double layer capacitor has a large surface area in order to increase the adsorption capacity, and therefore has a catalytic activity. It is believed that the catalytic activity is caused by a functional group on the surfaces of an active carbon (see Non-Patent Literature 1).

From the above it is believed to be effective for developing a high voltage electric double layer capacitor to decrease moisture, suppress the decrease in the surface area of an active carbon by a degradation product, and to suppress the degradation of an electrolyte solution. These development techniques are not independent, but believed to be correlated. Since, as described above, the mechanism of time-dependent deterioration of an electric double layer capacitor is not certain, decrease of moisture, suppression of decrease in the surface area of an active carbon by a degradation product, and suppression of degradation of an electrolyte solution are not all techniques effective for developing a high withstand voltage electric double layer capacitor.

It is reported that prolongation of the life of an electric double layer capacitor with high withstand voltage can be attained by developing a separator, which does not deteriorate under a high and long-lasting drying conditions, for example, by improving a separator material, as a means for decreasing moisture in an electric double layer capacitor (see Patent Literature 1 and 2). Through modification of a separator, a drying temperature can be increased. There remains, however a problem, that another constituting part, such as an organic substance constituent used for, *e.g.* a binder or an adhesive layer may be deteriorated and coat an active carbon or a separator, or clog their pores, causing decrease in the capacitance, or a problem, that the resistance increases by reason of detachment of a bonded surface. Further, for completely removing moisture from the pores of active carbon, or a functional group on a surface of an active carbon, a heating treatment *in vacuo* or in an inert gas flow at several hundred °C is required, and satisfactory results cannot be obtained.

Independently, it is reported that an electric double layer capacitor having high withstand voltage and superior long-term reliability can be obtained by removing moisture or a surface functional group adsorbed on an active carbon fiber cloth by means of a heat treatment of the active carbon fiber cloth after an activation treatment under an inert gas atmosphere between 700 to 1000°C (see for example Patent Literature 3). It is possible indeed to remove moisture or a surface functional group adsorbed on an active carbon fiber cloth by conducting a heat treatment of an active carbon fiber cloth under an inert gas atmosphere between 700 to 1000°C. However, there is a problem, that re-adsorption of moisture or re-introduction of a surface functional group may take place, unless the active carbon fiber cloth after removal should be stored and assembled to an electric double layer capacitor under a completely desiccated condition, which is not practical.

Apart from the above, a case is reported, in which various antacid agents are added to an active carbon polarizing electrode, based on a presumption that degradation of an electrolyte solution is caused by an acid generated inside a positive pole due to moisture (see for example Patent Literature 4). Further, another case is reported, in which a hydrogen ion is decreased by reacting or absorbing a hydrogen ion by, for example, adding an aluminum powder into an electrode, based on a presumption that degradation of an electrolyte solution is caused by a hydrogen ion formed by electrolysis of the generated moisture (see for example Patent Literature 5). However, there is a problem, that an antacid agent may occasionally degrade or react with an electrolytic solution, during charging and discharging of an electric double layer capacitor. If an aluminum powder is added, aluminum may react with an electrolyte ion to synthesize, for example, aluminum fluoride. Aluminum fluoride is an insulator, which may increase the resistance, which is not very favorable.

It is also reported that a surface functional group on a carbon material, which is a main component of a polarizing electrode, is capped incorporating a chemical bond by reacting the functional group with an organic silicon compound, so as to suppress gas generation or a reaction with an electrolyte by the surface functional group solution(see for example Patent Literature 6). There is a problem that, by a method of capping a surface functional group on an active carbon using an organic silicon compound, in addition to capping of a surface functional group, pores of a carbon material may be also closed subject to a production condition, leading to decrease in the capacitance.

JP2008252062 (A) describes an electrode for an electric double layer capacitor which is exposed to a vapor of a volatile organosilicon compound, having a boiling point of 50 to 250°C and a flash point of 100 or lower °C, such as, hexamethyldisilazane. Alternatively, the electrode is immersed in a treatment agent containing the volatile organosilicon compound as a main ingredient material. This causes a surface functional group of carbon material to react with the organosilicon compound, to set off a chemical combination. In addition, applying a volatile organosilicon compound, having a boiling point of 50 to 250°C and a flash point of 100°C or lower as a treatment agent enables surplus to be easily removed through a simplified drying process.

US2009325039 (A1) describes opposing electrode pairs formed into interposed separators. The separators are porous, and thus nonaqueous electrolyte solution can pass through the interior of the separators. Catalysts are adhered to regions, which are in direct contact with the nonaqueous electrolyte solution, of the surface of members forming an electricity storage device, namely catalysts being respectively adhered on the surfaces of electrode active material layers and catalysts being respectively adhered on the surfaces of electrode active material layers. The catalysts decompose water but do not decompose the nonaqueous electrolyte solution.

### Citation List

### Patent Literature

Patent Literature 1:Japanese Patent Laid-Open No. 2007-67155
Patent Literature 2:Japanese Patent Laid-Open No. 2008-112827
Patent Literature 3:Japanese Patent Laid-Open No. 2003-209029
Patent Literature 4:Japanese Patent Laid-Open No. 2007-73810
Patent Literature 5:Japanese Patent Laid-Open No. 10-106900
Patent Literature 6:Japanese Patent Laid-Open No. 2008-252062

### Non-Patent Literature

Non-Patent Literature 1: "Frontier of Development of Next Generation Capacitor (Jisedai Capacitor Kaihatsu Saizensen)" supervised by Katsuhiko Naoi, and Atsushi Nishino, Gijyutukyouiku, 2009, P. 91 and P. 141

### Summary of Invention

### Technical Problem

Under such circumstances, an object of the present invention is to provide a polarizing electrode material for withstanding a high voltage type electric double layer capacitor with high energy density and also with little time-dependent deterioration in the capacitance or the resistance, namely with excellent long-term reliability, as well as an electric double layer capacitor using the same.

### Solution to Problem

The present invention provides a polarizing electrode material used in an electric double layer capacitor, according to claim 1, comprising a porous carbon particle, an electroconductive aid, a tungsten oxide powder, and a binder, characterized in that the tungsten oxide powder is added at a content from 2 parts by mass to 40 parts by mass with respect to the total mass of the porous carbon particle, the electroconductive aid, and the binder as 100 parts by mass.

Further, the present invention provides an electric double layer capacitor according to claim 7.

### Advantageous Effects of Invention

According to the present invention a polarizing electrode material for an electric double layer capacitor with high voltage endurance aiming at improvement of the energy density and the long-term reliability, as well as an electric double layer capacitor using the same can be obtained. More specifically, an electrode for a high withstand voltage type electric double layer capacitor, as well as an electric double layer capacitor, in which the energy density is high and time-dependent deterioration of the capacitance and the resistance is little, namely the long-term reliability is superior, can be obtained.

### Brief Description of Drawings

Figure 1 is a schematic top view showing a punching method of an electrode produced in an Example and a Comparative Example.
Figure 2 is a schematic perspective view showing a constitution assembled with electrode parts and separators according to the present invention.

### Description of Embodiments

To attain the object, the inventors discovered that an electrode for a high withstand voltage type electric double layer capacitor, as well as an electric double layer capacitor, in which the energy density is high and time-dependent deterioration of the capacitance and the resistance is little, namely the long-term reliability is superior, can be provided by adding tungsten oxide to an electrode material.

A polarizing electrode material according to the present invention is used in an electric double layer capacitor, and characterized by comprising a porous carbon particle, an electroconductive aid, a tungsten oxide powder, and a binder.

There is no particular restriction on a porous carbon according to the present invention to be contained in a polarizing electrode material, insofar as it is a carbon-based substance able to form an electric double layer, and an active carbon, etc. can be used. An active carbon, whose BET specific surface area is not less than 500 m²/g, preferably not less than 1000 m²/g, and not more than 3000 m²/g, preferably not more than 2500 m²/g, can be used. There is no particular restriction on a source material of an active carbon. Specific examples thereof include a botanic material, such as wood, a coconut shell, and a pulping waste liquor, a fossil fuel material, such as coal, and a petroleum heavy oil, a thermal decomposition product thereof, such as petroleum pitch, and coke, and a synthetic resin, such as a phenol resin, a furan resin, a polyvinyl chloride resin, and a polyvinyl chloride vinylidene resin. Such a variety of materials can be utilized.

As an activation process for an active carbon, various processes including a gas activation process and a chemical activation process can be applied. Examples of a gas to be used in the gas activation include steam, carbon dioxide, oxygen, chlorine, sulfur dioxide, and a sulfur vapor. Examples of a chemical to be used in the chemical activation include zinc chloride, potassium hydroxide, sodium hydroxide, potassium carbonate, sodium carbonate, phosphoric acid, calcium chloride, and potassium sulfide.

Crushing of active carbon may be carried out by various processes using a ball mill, a jet mill, a hammer mill, etc. If a target grain size cannot be obtained by crushing, the grain size may be adjusted by classification.

The porous carbon may be a graphite-like microcrystalline carbon to be produced by conducting an activation treatment on a carbon material. Such a microcrystalline carbon can form an electric double layer by intercalating an ion between crystalline layers, when a voltage is applied thereto, which can be obtained, for example, according to the technique disclosed in Japanese Patent Laid-Open No. 11-317333.

Examples of an electroconductive aid contained in a polarizing electrode material according to the present invention include graphite having high electric conductivity owing to the existence of a delocalized π-electron; carbon black, which is a spherical aggregate forming a turbostratic structure constituted by accumulation of several layers of graphite carbon microcrystals (acetylene black, Ketjen black, other furnace black, channel black, thermal lamp black, etc.); and thermal decomposition graphite, which is formed by degrading thermally a gaseous hydrocarbon, such as methane, propane, and acetylene, and depositing the same into a form of a thin film on graphite as a substrate. Among them, from a viewpoint that the content of a metallic impurity is low and high electric conductivity can be secured, artificial graphite, especially high purity artificial graphite is preferable; and from a viewpoint that the particle size is relatively small, and the electric conductivity is relatively good, Ketjen black and acetylene black are preferable. The term "high purity" means herein that an ash content is 0.5 mass-% or less.

The content of an electroconductive aid is preferably 10 parts by mass or less with respect to the total mass of a porous carbon particle, an electroconductive aid, and a binder, which are main constituting elements of a polarizing electrode material, as 100 parts by mass. The total mass means a dry mass after elimination of a forming aid used in mixing the main constituting elements. An electroconductive aid is used in order to decrease the interparticle contact resistance of porous carbon particles, and 10 parts by mass or more was added in a conventional polarizing electrode layer. If, however, the amount of an electroconductive aid is increased, the processability of a polarizing electrode layer becomes poor, and a problem occurs, such as crazing, cracking, and deterioration of rollability. Further, since the particle size of an electroconductive aid is smaller than active carbon, there is a problem that, unless it is distributed uniformly, it may fill interparticle gaps in a polarizing electrode layer to block diffusion of an electrolyte solution.

With tungsten oxide contained in a polarizing electrode material according to the present invention, an electric double layer capacitor with high energy density and also with little time-dependent deterioration of the capacitance and the resistance, namely with excellent long-term reliability can be obtained. A reason, why tungsten oxide contained therein can exert high effectiveness, is not certain, but it is presumed that it can remove by adsorption moisture and a degradation product to prevent pores in a porous carbon particle and a separator from clogging.

The content of a tungsten oxide powder to be added is from 2 parts by mass to 40 parts by mass, and preferably the content is from 4 parts by mass to 30 parts by mass, with respect to the total mass of a porous carbon particle, an electroconductive aid, and a binder, which are main constituting elements of a polarizing electrode material, as 100 parts by mass (the total mass means a dry mass after elimination of a forming aid used in mixing the main constituting elements). If the content is less than 2 parts by mass, the adsorption removal effect on moisture and a degradation product is inadequate, and the effect becomes not satisfactory. On the other hand, if the content of tungsten oxide becomes higher, the amount of a porous carbon particle per volume of an electrode material decreases, and therefore the initial capacitance of a capacitor cell decreases. If the content is from 4 parts by mass to 30 parts by mass, the adsorption removal effect on moisture and a degradation product is significant, and at the same time the initial capacitance can be secured, which is more favorable.

Concerning the particle size of a tungsten oxide powder, any particle size can be utilized, insofar as it does not affect the thickness of an electrode layer in constituting an electrode layer for an electric double layer capacitor. Practically, the particle size of a tungsten oxide powder in a range of about 0.1 µm to 50 µm is preferable, because it does not affect the thickness of an electrode layer and steps for crushing and classification are not very costly.

A tungsten oxide powder is on the market generally in a particle size of several tens µm. A powder smaller than this particle size requires a step for crushing or classification. The smaller the particle size is, the longer the crushing time, and the higher the cost due to the lower yield. Consequently, the minimum particle size usable industrially is believed to be about 0.1 µm. The thickness of an electrode layer for an electric double capacitor is usually about 0.01 to 5 mm. Since the particle size of a tungsten oxide powder to be added should be restricted below the thickness of an electrode layer, considering the particle size of a commercially available tungsten oxide, the maximum particle size of about 30 µm is considered to be the practical maximum particle size.

A tungsten oxide powder can be crushed by various processes similar to crushing of an active carbon by using a ball mill, a jet mill, a hammer mill, etc. If a target grain size cannot be obtained, the grain size may be adjusted by classification. There is no particular restriction on a blending method for uniformly dispersing tungsten oxide and a porous carbon particle, and, for example, solid-solid blending, by which solid state tungsten oxide and a solid state porous carbon particle are blended together, or a slurry dispersion, in which at least one of the powders is dispersed in advance in a liquid, such as water and an organic solvent, may be used. Further, in blending the same, ultrasonic blending or blending by water flow may be applied so as to improve dispersion.

A binder contained in a polarizing electrode material according to the present invention binds a porous carbon particle, an electroconductive aid and a tungsten oxide powder. Examples of a binder used include polytetrafluoroethylene (PTFE), polyvinylidene fluoride (PVDF), polyethylene (PE), polypropylene (PP), styrenebutadiene rubber (SBR), and acrylonitrile-butadiene rubber (NBR).

The content of a binder is preferably 1 to 30 parts by mass, and more preferably 3 to 20 parts by mass, with respect to the total mass of a porous carbon particle, an electroconductive aid, and a binder, which are main constituting elements of a polarizing electrode material, as 100 parts by mass. The total mass means a dry mass after elimination of a forming aid used in mixing the main constituting elements. If the content of a binder is less than 1 part by mass, it becomes difficult to hold a porous carbon particle in a polarizing electrode material. Reversely, if the content exceeds 30 parts by mass, the energy density of an electric double layer capacitor becomes low and the internal resistance becomes high.

A polarizing electrode material according to the present invention can be produced in a layer form by a sheeting method or a coating method to a polarizing electrode layer. By a sheeting method, a sheet of an electrode material (an electrode layer) is formed in advance, to which an aluminum foil is bonded. A coating method is a method for forming an electrode layer, by which an electrode material is coated on an aluminum foil to be used as a collector. When the same active carbon is used, by a sheeting method a higher capacitance product can be obtained than by a coating method. Consequently as a method for producing an active carbon electrode, a sheeting method is preferable according to the present invention.

In the case of a sheeting method, the grain size of a porous carbon particle produced, for example, by the aforedescribed process is adjusted to an average particle size D50 of about 5 to 200 µm, to which an electroconductive aid, a tungsten oxide powder and a binder are added, followed by kneading, and a sheet can be formed by rolling. In kneading, liquid aids, such as water, ethanol, and acetonitrile, may be appropriately used singly or in a combination thereof.

An electric double layer capacitor has a structure with a positive pole and a negative pole formed by a pair of polarizing electrode layers facing each other intercalating a separator. Each polarizing electrode layer is connected to a collector, and each polarizing electrode layer is impregnated with an aqueous electrolyte solution or a nonaqueous electrolyte solution. An electric double layer capacitor is an accumulator element utilizing the capacitance of an electric double layer formed by adsorption/desorption of an electrolyte ion at an interface between a polarizing electrode layer and an electrolyte solution.

As a separator an insulating material, such as microporous paper, glass, and a porous film of a plastic, such as polyethylene, polypropylene, polyimide, and polytetrafluoroethylene The thickness of a separator is generally about 10 to 100 µm.

By choosing an appropriate nonaqueous electrolyte solution as an electrolyte solution, operation at a voltage beyond a voltage, at which electrolysis of water occurs, is possible. A nonaqueous electrolyte solution can be selected appropriately out of commonly known ones having been used conventionally in an electric double layer capacitor, taking into consideration the solubility of an electrolyte in a solvent, the reactivity with an electrode, *etc.* Example of a solvent for a nonaqueous electrolyte solution includes a carbonate ester, such as propylene carbonate, and butylene carbonate; a lactone, such as β-butyrolactone, and γ-butyrolactone; sulfolane; an amide solvent, such as dimethylformamide; nitromethane; 1,2-dimethoxyethane; and acetonitrile. The solvents may be used singly, or as a mixture solvent combining 2 or more thereof.

Examples of an electrolyte in an electrolyte solution include an acid including a fluorine-containing acid, such as tetrafluoroboric acid, hexafluorophosphoric acid, hexafluoroarsenic acid, hexafluoroantimonic acid, and trifluoroalkylsulfonic acid; and a chlorine-containing acid, such as perchloric acid and tetrachloroaluminic acid; and an alkali metal salt (sodium salt, potassium salt, etc.), an alkaline earth metal salt (magnesium salt, calcium salt, etc.), an ammonium salt, a tetraalkylammonium salt (tetramethylammonium salt, tetraethylammonium salt, etc.), a tetraalkylphosphonium salt (tetramethylphosphonium salt, tetraethylphosphonium salt, etc.) of the acid. The concentration of an electrolyte in an electrolyte solution is preferably 0.5 mol/L or higher, and more preferably 1.0 mol/L or higher. The upper limit of the concentration of an electrolyte is a solubility to be determined by an individual and specific combination of an electrolyte and a solvent.

With respect to an electric double layer capacitor according to the present invention a polarizing electrode material according to the present invention is placed at least on a negative pole side intercalating a separator. Even if a polarizing electrode material according to the present invention is placed only on a negative pole side, an electric double layer capacitor having advantageous effects of the present invention (high energy density and superior long-term reliability) can be obtained. Since tungsten oxide is expensive, use in only one of the electrodes offers more cost advantage owing to reduced consumption of tungsten oxide.

With respect to an electric double layer capacitor according to the present invention, a positive and negative pair of polarizing electrode materials according to the present invention may be placed intercalating a separator. In this case, an electric double layer capacitor having advantageous effects of the present invention (high energy density and superior long-term reliability) can be obtained.

### Examples

### Example 1

### [Polarizing electrode material]

To a mixture containing: as a porous carbon particle 80 parts by mass of a steam activated coconut shell active carbon with the BET specific surface area of about 1700 m²/g ("YP-50F", by Kuraray Chemical Co. Ltd.), as an electroconductive aid 10 parts by mass of an acetylene black powder ("Denka Black Powder Product", by Denki Kagaku Kogyo K.K.), as a binder 10 parts by mass of a polytetrafluoroethylene powder ("Teflon 6J", by Du Pont-Mitsui Fluorochemicals Co., Ltd.), and 10 parts by mass of tungsten trioxide ("Tungsten oxide" (Cika EP), average particle size: 30 µm, by Kanto Chemical Co., Ltd.), 30 parts by mass of ethanol was added. The mixture was kneaded, and the paste was then extruded to a tape. Then the obtained tape was subjected to rolling three times to form a sheet, which was dried at 150°C for 1 hour to remove ethanol to obtain a 100 mm-wide and 150 µm-thick sheet of a polarizing electrode material.

### [Collector]

A 150 mm-wide and 50 µm-thick high purity etched aluminum foil ("C512", by KDK Cop.) was used as a collector.

### [Production of polarizing electrode]

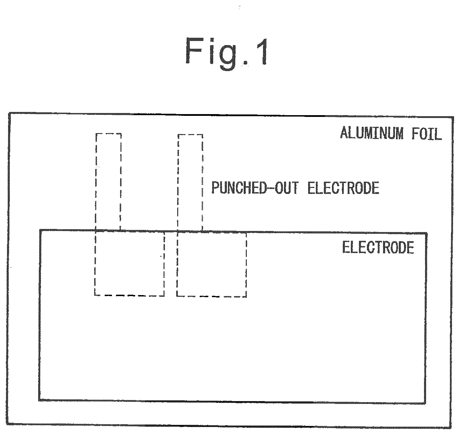

On both sides of a collector an electrically conductive adhesive solution ("GA-37", by Hitachi Powdered Metals Co., Ltd.) was coated, and an electrode material sheets were overlaid and passed through compression rolls for bonding the contact surfaces together under pressure to obtain a laminated sheet. The laminated sheet was kept in an oven set at a temperature of 150°C for 10 min for removing a dispersing medium from the electrically conductive adhesive solution layer by evaporation to obtain a polarizing electrode. The laminated sheet was punched out in the manner as shown in Figure 1, where the dimension of a part, on which a polarizing electrode material sheet was laminated, was 3 cm square, and a lead (a part of the collector, on which the polarizing electrode was not laminated) had a shape of 1x5 cm, to form a square polarizing electrode.

### [Production of electric double layer capacitor]

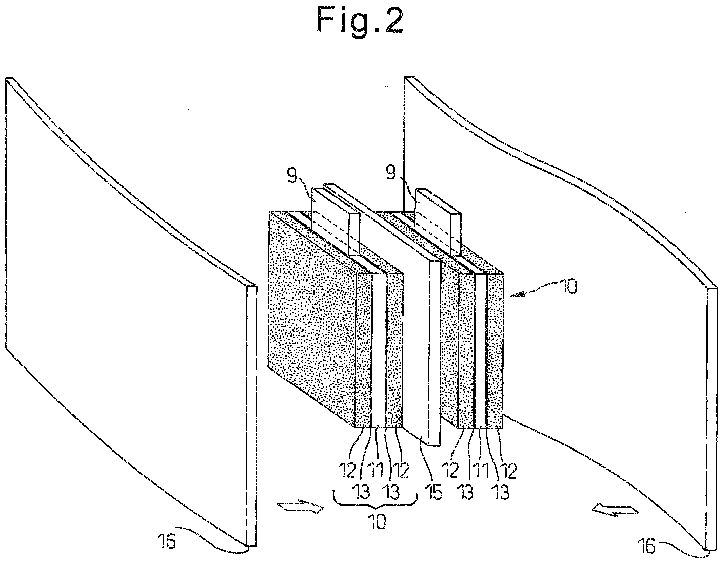

Using 2 polarizing electrodes as a positive pole and a negative pole, inserting therebetween as a separator a hydrophilization-treated porous PTFE sheet ("BSP0708070-2", by Japan Gore, Inc.) in a size of thickness 80 µm, and 3.5 cm square, covering a part with the electrodes and the separator by 2 sheets of an aluminum laminate material ("PET12/A120/PET12/CPP30 dry laminate", by Showa Denko Packaging Co., Ltd.) in a size of 5×10 cm, and heat-sealing three sides including a lead, an aluminum pack cell was completed. (In Figure 2, is shown an electric double layer capacitor before the aluminum laminate materials are heat-sealed.) In heat-sealing, a part of a lead was directed outward from the aluminum pack cell, and a contact area of the lead and the aluminum pack cell was sealed by heat-sealing of the lead and the aluminum laminate materials. The aluminum pack cell was dried *in vacuo* at 150°C for 24 hours, which was brought into a glove box in which a dew point of -60°C or less in an argon atmosphere was maintained, keeping the opening (a not sealed side) upward, into which 4 mL of a 1.5 mol/L solution of triethylmethylammonium tetrafluoroborate in propylene carbonate was injected. The cell was left standing under a reduced pressure of -0.05 MPa for 10 min to replace a gas inside the electrode with the electrolyte solution. Finally the opening of the aluminum pack was heat-sealed to complete a single laminate type electric double layer capacitor. The electric double layer capacitor was stored at 40°C for 24 hours so as to condition the inside of the electrode with the electrolyte solution. Then the capacitor was sandwiched by stainless steel plates in a size of 5x5 cm, and thickness of 5 mm and compressed the surface at 1 MPa. The capacitor was used as Example 1.

### Example 2

The same procedures were conducted as in Example 1, except that the used amount of tungsten trioxide was changed to 2 parts by mass.

### Example 3

The same procedures were conducted as in Example 1, except that the used amount of tungsten trioxide was changed to 40 parts by mass.

### Example 4

The same procedures were conducted as in Example 1, except that tungsten trioxide was crushed and classified to an average particle size of 10 µm.

### Example 5

The same procedures were conducted as in Example 1, except that tungsten trioxide was crushed and classified to an average particle size of 0.2 µm.

### Example 6

The same procedures were conducted as in Example 1, except that for an electrode material sheet of the positive pole, tungsten oxide was eliminated from the recipe of Example 1, while an electrode material sheet of the negative pole was completely identical with Example 1.

### Example 7

The same procedures were conducted as in Example 1, except that the electrolyte solution was changed to 4 mL of 1.0 mol/L tetraethylammonium tetrafluoroborate solution in acetonitrile.

### Example 8

### [Preparation of coating liquid]

To 10.0 g of a mixture containing: as a porous carbon particle 80 parts by mass of a steam activated coconut shell active carbon with the BET specific surface area of about 1700 m²/g ("YP-50F", by Kuraray Chemical Co. Ltd.), as an electroconductive aid 10 parts by mass of an acetylene black powder ("Denka Black Powder Product", by Denki Kagaku Kogyo K.K.), and 10 parts by mass of tungsten trioxide ("Tungsten oxide" (Cika EP), average particle size: 30 µm, by Kanto Chemical Co., Ltd.), 100 g of an electrically conductive adhesive solution ("GA-37", by Hitachi Powdered Metals Co., Ltd.) and 100 of distilled water were added, which was then mixed by a stirrer to a coating liquid.

### [Collector]

The same collector as in Example 1 was used.
Namely, a 150 mm-wide and 50 µm-thick high purity etched aluminum foil ("C512", by KDK Cop.) was used as a collector.

### [Production of polarizing electrode (Application of coating liquid)]

The coating liquid was applied on to the collector by a roll coater to the thickness of 50 µm. Then the coated collector was kept in an oven set at a temperature of 50°C for 10 min for removing a dispersing medium from a coating liquid layer by evaporation to obtain a polarizing electrode. The coated collector was punched out as shown in Figure 1, where the dimension of a part, on which the coating liquid was coated, was 3 cm square, and a lead (a part of the collector, on which the coating liquid was not coated) had a shape of 1x5 cm, to form a square polarizing electrode.

### [Production of electric double layer capacitor]

Using the polarizing electrode produced as above, an electric double layer capacitor was manufactured as in Example 1 and conditioned, and used as Example 8. The capacitance retention rate of the obtained capacitor after 600 hours was 85%, and the resistance increase rate after 600 hours was 140%, exhibiting superior voltage endurance. The initial capacitance was 12.4 F/cc, which was about 70% of the capacitance obtained by the sheeting method.

### Comparative Example 1

The same procedures were conducted as in Example 1, except that the tungsten trioxide was excluded from the electrode material sheet in Example 1.

### Comparative Example 2

The same procedures were conducted as in Example 1, except that vanadium pentoxide ((Cica GR grade) by Kanto Chemical Co., Ltd.) crushed and classified to an average particle size of 25 µm substituted for tungsten trioxide.

### Comparative Example 3

The same procedures were conducted as in Example 1, except that silicon dioxide with an average particle size of 3.5 µm substituted for tungsten trioxide.

### Comparative Example 4

The same procedures were conducted as in Example 1, except that dialuminum trioxide with an average particle size of 0.013 µm substituted for tungsten trioxide.

### Comparative Example 5

The same procedures were conducted as in Example 1, except that magnesium oxide ((GR grade) by Kanto Chemical Co., Ltd.) crushed and classified to an average particle size of 25 µm substituted for tungsten trioxide.

### Comparative Example 6

The same procedures were conducted as in Example 1, except that diboron trioxide ((Cica GR grade) by Kanto Chemical Co., Ltd.) crushed and classified to an average particle size of 25 µm substituted for tungsten trioxide.

### Comparative Example 7

The same procedures were conducted as in Example 1, except that dilithium trioxide (by Wako Pure Chemical Industries, Ltd.) crushed and classified to an average particle size of 25 µm substituted for tungsten trioxide.

### Comparative Example 8

The same procedures were conducted as in Example 1, except that molybdenum trioxide ((Cica GR grade) by Kanto Chemical Co., Ltd.) crushed and classified to an average particle size of 25 µm substituted for tungsten trioxide.

### Comparative Example 9

The same procedures were conducted as in Example 1, except that calcium oxide ((Cica GR grade) by Kanto Chemical Co., Ltd.) crushed and classified to an average particle size of 25 µm substituted for tungsten trioxide.

### Comparative Example 10

The same procedures were conducted as in Example 1, except that zinc borate ((Cica GR grade) by Kanto Chemical Co., Ltd.) crushed and classified to an average particle size of 25 µm substituted for tungsten trioxide.

### Comparative Example 11

The same procedures were conducted as in Example 1, except that zirconium dioxide crushed and classified to an average particle size of 25 µm substituted for tungsten trioxide.

### Comparative Example 12

The same procedures were conducted as in Example 1, except that anatase titanium oxide with a primary average particle size of 0.07 µm substituted for tungsten trioxide. The resulted capacitance retention rate after 600 hours was 86%. The resistance increase rate was as high as about 200%, compared to about 140% or less for Examples 1 to 6, to show significant time-dependent deterioration (increase in resistance).

### Comparative Example 13

The same procedures were conducted as in Example 7, except that the tungsten trioxide was excluded from the electrode material sheet in Example 7.

### Measurement/evaluation items

The following evaluations were conducted on the electric double layer capacitors of the aforedescribed Examples and Comparative Examples. The results are shown in Table 1.
(1) capacitance (initial and after 600 hours *1)
(2) internal resistance (initial and after 600 hours *1)
(3) capacitance retention rate (%) =(initial capacitance - capacitance after 600 hours *1)×100/(initial capacitance)
(4) resistance increase rate (%) =(initial internal resistance - internal resistance after 600 hours *1)×100/(initial internal resistance)
*1: When the capacitance retention rate dropped to 80% or less within 600 hours, the evaluation was terminated prematurely and the time (hours) elapsed until the capacitance retention rate dropped to 80% was recorded.

### <Capacitance density>

Capacitance was measured as follows. The electric double layer capacitor was charged, wherein the charging current was 10 mA/cm², and the charging voltage was 3.0 V. The charging duration was 60 min for measuring the initial properties. For measuring the long term properties, the charging duration was stepwise extended appropriately to 600 hours to measure the time elapsed until the capacitance retention rate reached 80% (measured after 1, 2, 4, 8, 16, 24, 36 hours, thereafter at intervals of 12 hours until 600 hours; and the measurement results were plotted to determine the time elapsed until the capacitance retention rate reached 80%). Discharging was conducted to 0 V under a condition of 10 mA/cm². The procedure from the initiation of the charging to the completion of the discharging was defined as 1 cycle. Conducting continuously 10 cycles, the discharge curve at the 10th cycle was integrated from the initiation of discharge to 0 V to determine the capacitance of the electric double layer capacitor on the occasion of charging at the 10th cycle, which was divided by the electrode volume to calculate the capacitance density. The discharge temperature was 70°C.

### <Direct current internal resistance>

The internal resistance was calculated from the formula V=IxR, when the capacitance density was measured as above.

### Table 1

**Table 1**

| | Additive | | | Type of electrolytic solution Remark 1 | Initial capacitance (F/cc) | Capacitance retention rate after 600 hours (%) | Time elapsed until capacitance retention rate reaching 80% (H) | Resistance increase rate after 600 hours (%) | Note |
|---|---|---|---|---|---|---|---|---|---|
| | Type | Content (mass%) | Particle size (µm) | | | | | | |
| Example 1 | WO3 | 10 | 30 | TEMA/PC | 17.5 | 84 | | 135 | |
| Example 2 | WO3 | 2 | 30 | TEMA/PC | 17.5 | 83 | | 130 | |
| Example 3 | WO3 | 40 | 30 | TEMA/PC | 17 | 85 | | 140 | |
| Example 4 | WO3 | 10 | 10 | TEMA/PC | 17.3 | 84 | | 140 | |
| Example 5 | WO3 | 10 | 0.2 | TEMA/PC | 17.4 | 85 | | 135 | |
| Example 6 | WO3 | 10 | 30 | TEMA/PC | 17.4 | 86 | | 140 | Used only for negative pole |
| Example 7 | WO3 | 10 | 30 | TEA/AN | 17.6 | 85 | | Not measured | |
| Example 8 | WO3 | 10 | 30 | TEMA/PC | 12.4 | 85 | | 140 | Coating method |
| Comparative Example 1 | none | 0 | | TEMA/PC | 17.2 | 80 | 600 | | |
| Comparative Example 2 | V2O5 | 10 | 25 | TEMA/PC | 17.3 | Prematurely terminated (Remark 2) | 290 | Prematurely terminated (Remark 2) | |
| Comparative Example 3 | SiO2 | 10 | 3.5 | TEMA/PC | 17 | Prematurely terminated (Remark 2) | 590 | Prematurely terminated (Remark 2) | |
| Comparative Example 4 | Al2O3 | 10 | 0.013 | TEMA/PC | 17 | Prematurely terminated (Remark 2) | 400 | Prematurely terminated (Remark 2) | |
| Comparative Example 5 | MgO | 10 | 25 | TEMA/PC | 17.4 | Prematurely terminated (Remark 2) | 580 | Prematurely terminated (Remark 2) | |
| Comparative Example 6 | B2O3 | 10 | 25 | TEMA/PC | 17.2 | Prematurely terminated (Remark 2) | 100 | Prematurely terminated (Remark 2) | |
| Comparative Example 7 | Li2O3 | 10 | 25 | TEMA/PC | 17.2 | Prematurely terminated (Remark 2) | 100 | Prematurely terminated (Remark 2) | |
| Comparative Example 8 | MoO3 | 10 | 25 | TEMA/PC | 16.8 | Prematurely terminated (Remark 2) | 220 | Prematurely terminated (Remark 2) | |
| Comparative Example 9 | CaO | 10 | 25 | TEMA/PC | 16.7 | Prematurely terminated (Remark 2) | 30 | Prematurely terminated (Remark 2) | |
| Comparative Example 10 | ZnB2O5 | 10 | 25 | TEMA/PC | 17 | Prematurely terminated (Remark 2) | 300 | Prematurely terminated (Remark 2) | |
| Comparative Example 11 | ZrO2 | 10 | 25 | TEMA/PC | 17.5 | Prematurely terminated (Remark 2) | 595 | Prematurely terminated (Remark 2) | |
| Comparative Example 12 | TiO2 | 10 | 0.007 | TEMA/PC | 17.8 | 86 | | 220 | |
| Comparative Example 13 | none | 0 | | TEA/AN | 17.6 | Prematurely terminated (Remark 2) | 450 | Prematurely terminated (Remark 2) | |

| | | | | | | | | | |
|---|---|---|---|---|---|---|---|---|---|
| Remark 1: TEMA/PC (1.5 mol/L solution of triethylmethylammonium tetrafluoroborate in propylene carbonate) TEA/AN (1.0 mol/L tetraethylammonium tetrafluoroborate solution in acetonitrile) Remark 2: When the capacitance retention rate dropped to 80% or less within 600 hours, the evaluation was terminated prematurely. | | | | | | | | | |

### Reference Signs List

9 COLLECTOR TERMINAL
10 POLARIZING ELECTRODE
11 COLLECTOR
12 POLARIZING ELECTRODE LAYER
13 ELECTRICALLY CONDUCTIVE ADHESIVE
15 SEPARATOR
16 ALUMINUM LAMINATE MATERIAL

## Claims

1. A polarizing electrode material used in an electric double layer capacitor, comprising a porous carbon particle, an electroconductive aid, a tungsten oxide powder, and a binder;
**characterized in that** the tungsten oxide powder is added at a content from 2 parts by mass to 40 parts by mass with respect to the total mass of the porous carbon particle, the electroconductive aid, and the binder, as 100 parts by mass.

2. The electrode material according to Claim 1, **characterized in that** the electric double layer capacitor comprises a nonaqueous electrolyte solution.

3. The electrode material according to Claim 1 or 2, **characterized in that** the porous carbon particle is an active carbon having the BET specific surface area from 1000 m²/g to 3000 m²/g.

4. The electrode material according to any one of Claims 1 to 3, **characterized in that** the average particle size of the tungsten oxide powder is from 0.1 µm to 50 µm.

5. The electrode material according to any one of Claims 1 to 4, **characterized by** being formed to a sheet form by a rolling treatment.

6. The electrode material according to any one of Claims 1 to 5, **characterized in that** the binder is polytetrafluoroethylene.

7. An electric double layer capacitor, **characterized in that** the electrode material according to any one of Claims 1 to 6 is placed at least on a negative pole side intercalating a separator.

8. An electric double layer capacitor according to claim 7, **characterized in that** a positive and negative pair of the electrode materials according to any one of Claims 1 to 6 are placed intercalating a separator.

## Patentansprüche

1. Polarisierendes Elektrodenmaterial, das in einem elektrischen Doppelschichtkondensator verwendet wird und das poröses Kohlenstoffpartikelmaterial, ein elektrisch leitendes Hilfsmittel, Wolframoxidpulver und ein Bindemittel aufweist,
**dadurch gekennzeichnet, dass** das Wolframoxidpulver in einem Anteil von 2 Masseteilen bis 40 Masseteilen bezogen auf die Gesamtmasse des porösen Kohlenstoffpartikelmaterials, des elektrisch leitenden Hilfsmittels und des Bindemittels als 100 Masseteile zugegeben wird.

2. Elektrodenmaterial nach Anspruch 1,
**dadurch gekennzeichnet, dass** der elektrische Doppelschichtkondensator eine nicht-wässrige Elektrolytlösung aufweist.

3. Elektrodenmaterial nach Anspruch 1 oder 2,
**dadurch gekennzeichnet, dass** das poröse Kohlenstoffpartikelmaterial ein Aktivkohlenstoff mit der spezifischen BET-Oberfläche von 1000 m²/g bis 3000 m²/g ist.

4. Elektrodenmaterial nach einem der Ansprüche 1 bis 3,
**dadurch gekennzeichnet, dass** die durchschnittliche Partikelgröße des Wolframoxidpulvers 0,1 µm bis 50 µm beträgt.

5. Elektrodenmaterial nach einem der Ansprüche 1 bis 4,
**dadurch gekennzeichnet, dass** es durch eine Walzbehandlung als Flächenkörperform ausgebildet ist.

6. Elektrodenmaterial nach einem der Ansprüche 1 bis 5,
**dadurch gekennzeichnet, dass** das Bindemittel Polytetrafluorethylen ist.

7. Elektrischer Doppelschichtkondensator,
**dadurch gekennzeichnet, dass** das Elektrodenmaterial nach einem der Ansprüche 1 bis 6 zumindest auf einer negativen Polseite unter Interkalation eines Separators angeordnet ist.

8. Elektrischer Doppelschichtkondensator nach Anspruch 7,
**dadurch gekennzeichnet, dass** ein positives und ein negatives Paar des Elektrodenmaterials nach einem der Ansprüche 1 bis 6 unter Interkalation eines Separators angeordnet werden.

## Revendications

1. Matière faisant office d'électrode de polarisation utilisée dans un condensateur électrique du type à double couche, comprenant une particule de carbone poreuse, un adjuvant électroconducteur, une poudre d'oxyde de tungstène, et un liant, **caractérisée en ce que** la poudre d'oxyde de tungstène est ajoutée en une teneur allant de 2 parties en masse à 40 parties en masse par rapport à la masse totale de la particule de carbone poreuse, de l'adjuvant électroconducteur et du liant, totalisant 100 parties en masse.

2. Matière faisant office d'électrode selon la revendication 1, **caractérisée en ce que** le condensateur électrique du type à double couche comprend une solution d'électrolyte non aqueuse.

3. Matière faisant office d'électrode selon la revendication 1 ou 2, **caractérisée en ce que** la particule de carbone poreuse représente un charbon actif possédant une aire de surface spécifique BET de 1.000 m²/g à 3.000 m²/g.

4. Matière faisant office d'électrode selon l'une quelconque des revendications 1 à 3, **caractérisée en ce que** la granulométrie moyenne de la poudre d'oxyde tungstène s'élève de 0,1 µm à 50 µm.

5. Matière faisant office d'électrode selon l'une quelconque des revendications 1 à 4, **caractérisée en ce qu'**elle est réalisée sous la forme d'une feuille via un traitement de laminage.

6. Matière faisant office d'électrode selon l'une quelconque des revendications 1 à 5, **caractérisée** en ce le liant est du polytétrafluoréthylène.

7. Condensateur électrique du type à double couche, **caractérisé en ce que** la matière faisant office d'électrode selon l'une quelconque des revendications 1 à 6 est placée au moins sur un côté correspondant au pôle négatif avec intercalation d'un séparateur.

8. Condensateur électrique du type à double couche selon la revendication 7, **caractérisé en ce qu'**une paire positive et négative des matières faisant office d'électrodes selon l'une quelconque des revendications 1 à 6 sont placées avec intercalation d'un séparateur.
